# EUROPÄISCHE PATENTSCHRIFT

(11) **EP 2 346 714 B1**
(45) Veröffentlichungstag und Bekanntmachung des Hinweises auf die Patenterteilung: **18.01.2017**
(21) Anmeldenummer: 09783119.2
(22) Anmeldetag: 17.09.2009
(51) Int. Cl.: B60N 2/02

(54) **FAHRZEUGSITZ**
VEHICLE SEAT
SIEGE DE VEHICULE

(30) Priorität: 10.11.2008 DE 102008043617
(43) Veröffentlichungstag der Anmeldung: 27.07.2011
(73) Patentinhaber: Robert Bosch GmbH, 70442 Stuttgart (DE)
(72) Erfinder: LICH, Thomas, 71409 Schwaikheim (DE); ZIMMERMANN, Marc, 71229 Leonberg (DE); D'ADDETTA, Gian, Antonio, Stuttgart 70176 (DE)
(86) Internationale Anmeldenummer: PCT/EP2009/062052
(87) Internationale Veröffentlichungsnummer: WO 2010/052058

(56) Entgegenhaltungen:
- WO-A-00/12350
- WO-A1-2006/105915
- WO-A2-2009/111362
- DE-A1- 10 258 245
- DE-C1- 10 043 290
- GB-A- 2 334 006
- US-A- 4 924 162

## Beschreibung

### Stand der Technik

Die Erfindung geht aus von einem Fahrzeugsitz sowie einem Betriebsverfahren für einen Fahrzeugsitz nach der Gattung der unabhängigen Patentansprüche.

Bei Seitenkollisionen kommt es für den Insassen eines Fahrzeugs auf beiden Fahrzeugseiten, also auf der stoßzugewandten, als auch auf der stoßabgewandten Seite häufig zu schweren bis hin zu tödlichen Verletzungen. Bestimmt man die Häufigkeit von Seitenkollisionen, bei denen mindestens eine Person auf der stoßzugewandten Fahrzeugseite sitzt, so sind dies ca. 70 %, bei denen eine erhöhte Verletzungswahrscheinlichkeit vorliegt. Betrachtet man die stoßabgewandte Fahrzeugseite, so zeigt sich dass bei ca. 65 % mindestens eine Person auf der stoßabgewandten Fahrzeugseite gesessen hat.

Derzeit werden in der Fahrzeugtechnik diverse Rückhaltesysteme beziehungsweise Strukturlösungen eingesetzt, um die Folgen von Seitenkollisionen zu mindern. Dazu gehören vor allem Seitenairbags, wie beispielsweise Curtainairbags, Kopfairbags oder kombinierte Kopf-Thoraxairbags oder spezielle Versteifungen in der Fahrzeugstruktur, wie beispielsweise Schweller oder Seitenaufprallschutzsysteme. Diese Systeme haben bei einer Seitenkollision die Aufgabe zum einen, den Insassen vor einem Kontakt mit intrudierenden Fahrzeugteilen an der direkten Stoßseite zu schützen und zum anderen, einen Teil der Bewegungsenergie des Insassen zu dissipieren.

Typischerweise dient der Thoraxairbag oder der kombinierte Kopf-Thoraxairbag, der an der Sitzaußenseite, der B-Säule oder immer öfter im Türbereich verbaut wird, als erster Prallschutz für den Insassen des Fahrzeugs. Die Auslösezeiten für diese Airbageinheiten liegen üblicherweise im Bereich von 5 - 8 ms nach dem Kontakt des Fahrzeugs mit einem Hindernis bzw. nach einem Crash. Die Aufblaszeiten variieren je nach Luftsackvolumen und eingesetzter Gasgeneratortechnik zwischen 10 und 20 ms. Im optimalsten Fall dürfte ein solches Schutzsystem 15 ms nach Detektion des Crashs über seine hundertprozentige Schutzwirkung verfügen. Typischerweise liegt die Standzeit eines solchen Seitenairbags, der sich zwischen Insassen bzw. Sitz und B-Säule bzw. Fahrzeugtür schiebt, bei 80 - 120 ms, zumal nach dieser Zeit schon eine Reboundbewegung des Insassen weg von der schädlichen Struktur eingesetzt hat. Um den hohen Ansprüchen, was Auslösezeit und Aufblaszeit angeht, zu genügen, werden gerne kombinierte pyrotechnische Druckgasgeneratoren verwendet, welche schon in einem frühen Stadium der Aktivierung des Generators, d.h. ca. 2 - 5 ms nach der Detektion, genügend Energie zum Aufblasen des Luftsacks besitzen. Ab 5 - 10 ms sorgt dann der Druckgasgeneratoranteil des Gasgenerators für die notwendige Konstanz in der Gasausströmung.

Eine andere Situation zeigt sich bei den Kopf-, Window- oder Curtainairbags. Diese dienen ausschließlich dem Schutz des Kopfes. Damit steht ihnen für den Aufblasvorgang deutlich mehr Zeit zur Verfügung, allerdings ist auch das Luftsackvolumen deutlich größer. Auch deren Standzeit ist, bedingt durch die Abdeckung von Rollover-Unfällen, mit 5 s um ein Vielfaches länger.

Mit der Einführung neuer Regelungen zum Seitencrash in den USA wird sich die Situation in der Seitencrashperformance der Fahrzeughersteller deutlich verändern. Nach diesen neuen Regelungen wird nun ein schräger Pfahlcrash, bei welchem ein Fahrzeug um 15 ° gegenüber der üblichen senkrechten Crashrichtung verdreht ist, mit 32 km/h für alle für den US-Markt zugelassenen Fahrzeuge verbindlich. Damit kommt zum ersten Mal ein Testdummy beim Seitenaufprall zum Einsatz, der eine kleine Frau nach SID-Ils repräsentiert. Weiterhin wird ein verbesserter EUROSID-Dummy nach ES-2re vorgeschrieben. Insgesamt zielt dieser neue Standard auf die Erhöhung des Kopf- und Thoraxschutzes beim Seitenaufprall. Allerdings haben Studien im Vorfeld gezeigt, dass aktuelle Fahrzeuge, mit Ausnahme von SUV-Fahrzeugen, diesen Ansprüchen und den entsprechenden Verletzungskriterien anzupassen sind. Ein häufiges Problem ist, dass der zum Schutz des Thoraxbereichs eingesetzte Thoraxairbag sich beim oben genannten Pfahlcrash gemäß FMVSS213 erst gar nicht aufblasen kann.

Ein weiterer Problembereich bezieht sich auf den Schutz der Insassen auf der stoßabgewandten Seite, was auch als Far-Side-Crash bezeichnet wird. Obwohl versucht wird, durch Verbesserungen an der Konstruktion von Fahrzeugen die Performance der Seitenstruktur zu verbessern, kann auf der stoßabgewandten Fahrzeugseite oft kein ausreichender Insassenschutz über die Fahrzeugstruktur sichergestellt werden. Die Folge für einen angegurteten Insassen, welcher auf der stoßabgewandten Fahrzeugseite sitzt, ist häufig das Herausrutschen aus dem Sicherheitsgurt im Schulterbereich durch mangelnde Rückstraffung und damit Reibung zwischen Gurt und Insassen. Der Insasse wird mehr oder weniger nur noch durch den Beckengurt fixiert, welcher ein Herausschleudern des Insassen aus dem Fahrzeug trotz der verminderten Schutzwirkung unterbindet. Durch die fehlende Fixierung des Oberkörpers des Insassen, kann dieser sich im Innenraum mehr oder weniger frei bewegen. Die dadurch häufigste Verletzungsursache, ist der Zusammenstoß mit anderen Insassen oder im Anschluss in der Reboundbewegung der Zusammenstoß mit den Fahrzeuginnenraumteilen.

Derzeitige Rückhaltesysteme werden aufgrund des Unfallszenarios dahingehend ausgelegt, dass der Seiten- und Kopfairbag nur auf der stoßzugewandten Fahrzeugseite gezündet wird, so dass der Insasse nicht durch intrudierende Fahrzeugteile getroffen wird und dass der Airbag den Insassen aus der Gefahrenzone bewegt. Im Falle eines Überrollvorgangs, werden in der Regel auf beiden Fahrzeugseiten die dafür vorgesehenen Kopfairbags gezündet, so dass keine Objekte von außen in den Fahrzeuginnenraum dringen können.

Zum Schutz der Insassen auf der stoßabgewandten Fahrzeugseite existieren bereits Lösungen. In dem deutschen Gebrauchsmuster DE 203 14 924 U1 wird beispielsweise eine Sicherheitsanordnung für einen auf einem Fahrzeugsitz sitzenden Fahrzeuginsassen mit einem einen Beckengurt und einen Schultergurt aufweisenden Drei-Punkt-Sicherheitsgurt beschrieben. Diese Sicherheitsanordnung beinhaltet einen zusätzlichen, über die von dem Drei-Punkt-Sicherheitsgurt freigelassene Schulter verlaufenden und den Schultergurt des Drei-Punkt-Sicherheitsgurts kreuzenden Zwei-Punkt-Schultergurt. Da im Falle eines Far-Side-Seitenaufpralls für den auf der stoßabgewandten Seite befindlichen Insassen das Risiko besteht, dass dieser sich aufgrund der von der Fahrzeuginnenseite her einwirkenden Kraftkomponente aus dem Schultergurt des Drei-Punkt-Sicherheitsgurtes herausdreht, ist bei dieser Sicherheitsanordnung zusätzlich ein Zwei-Punkt-Gurt vorgesehen. Dieser zusätzliche Gurt wird ebenfalls im Schulterbereich der Rückenlehne über einen integrierten Gurtaufroller angesteuert und kreuzt im Brustbereich des Fahrzeuginsassen den Schultergurt des Drei-Punkt-Gurtes. Damit verhindert dieser zusätzliche Zwei-Punkt-Gurt ein Herausdrehen des Fahrzeuginsassen aus dem Schultergurt des Drei-Punkt-Gurtes.

Eine ähnliche Vorrichtung ist in der deutschen Patentschrift DE 10 2005 002 393 B3 beschrieben. Dabei wird eine Fahrzeuginsassenschutzvorrichtung mit einem Drei-Punkt-Sicherheitsgurt vorgestellt, bei welchem die obere im Schulterbereich des Fahrzeuginsassen befindliche Anlenkung für den Schultergurt und die untere Anlenkung für den Beckengurt sich auf der dem Fahrzeugsitz benachbarten Fahrzeugtür abgewandten Seite des Fahrzeugsitzes befinden. Zusätzlich beinhaltet dieses System einen auf der der Fahrzeugtür zugewandten Seite des Fahrzeugsitzes angeordneten und sich bei Auslösung zwischen der Fahrzeugtür und dem Fahrzeuginsassen entfaltenden Seitenairbag. Dieser ist dadurch gekennzeichnet, dass er mit einer über eine Steuervorrichtung zu- und abschaltbaren Ventilationseinrichtung zum Auslassen des in dem aufgeblasenen Seitenairbag befindlichen Gases versehen ist und dass die Ventilationseinrichtung bei einem festgestellten Seitenaufprall zugeschaltet und bei einem festgestellten Fahrzeugüberschlag abgeschaltet ist. Ähnliche Systeme werden in der europäischen Offenlegungsschrift EP 1 470 969 A1 beschrieben.

Eine weitere Lösung schlägt vor, auch auf der stoßabgewandten Fahrzeugseite die seitlichen Rückhaltemittel nach einer entsprechenden Verzögerung zu aktivieren. Damit zeigt sich, dass weitere Komponenten der Sicherheitsausstattung moderner Fahrzeuge ein großes zum Teil noch ungenutztes Potential zum Schutz bei Seitencrashes besitzen. Eines dieser oft unterschätzen Systeme der passiven Sicherheit ist der Sitz. Zusätzlich zu den passiven Sicherheitssystemen wie Airbags, Retraktoren und Gurtstraffern werden in Fahrzeuge weitere Systeme eingesetzt, die den Seitenhalt der Insassen verbessern oder im Kollisionsfall diese auch besser zu schützen vermögen. Dazu zählen Sportsitze mit ausgeprägten Seitenflanken oder Komfortsitze, welche bei erhöhten Querbeschleunigungen die Seitenbereiche des Sitzes mit Luft füllen. Nachteilig jedoch ist, dass Sportsitze nicht für jedermann einen ausreichenden Sitzkomfort bieten und sie somit seltener im Fahrzeug verbaut sind. Weiterhin ist bei diesen aktiven, anpassungsfähigen Sitzen von Nachteil, dass diese in einer ganz anderen Zeitskala als für den Crashfall notwendig operieren, d.h. es ist nicht möglich diese Systeme im Crashfall in einem zum Schutz geeigneten Rahmen auszulösen. Dennoch bieten solche fahrdynamischen Sitze den Vorteil, dass der Insasse durch die vorangegangene so genannte fahrdynamische Aktivierung des Sitzes von der Seitenstruktur des Fahrzeugs ferngehalten wird, wenn das Fahrzeug im Schleuderfall, aus der Kurve getragen wird. Eine alternative Umsetzung eines fahrdynamischen Sitzes ist beispielsweise ein Sitz mit zweigeteiltem Rückenpolster auf der Basis eines "split-seat"-Konzeptes. Dieser Sitz folgt den Bewegungen des Oberkörpers in jeder Sitzposition und gewährleistet die optimale Entlastung der Wirbelsäule. Lehnt sich der Autofahrer beispielsweise im Sitz weiter zurück, schwenkt automatisch der untere Teil des Rückenpolsters nach vorne und stützt das Becken ab.

Solche fahrdynamischen Fahrzeugsitze mit verstellbaren Sitzkomponenten, welche eine Seitenabstützung in Abhängigkeit von Beschleunigungen in Richtung einer Fahrzeugquerachse bewirken, werden beispielsweise auch in der Patentschrift US 4,924,162 und in den Offenlegungsschriften WO 00/12350 und GB 2 334 006 A beschrieben, wobei die verstellbaren Sitzkomponenten unabhängig von ihrer Stellposition immer innerhalb der Außenkontur des Fahrzeugsitzes angeordnet sind.

Hierbei zeigt sich, dass crash-aktive Systeme im Sitz ein großes Potential zum Insassenschutz bei Seitencrashes bieten. Den bekannten Lösungen ist es gemeinsam, bestehende Seiten- und Sitzelemente in entsprechender Weise zu verfahren oder zu positionieren. Dies geschieht vorwiegend über das Aufblasen der Seitenwangen im Falle einer drohenden Seitenkollision und das Aufstellen des Sitzkissens im Falle einer drohenden Frontkollision beziehungsweise auch nach einem Kontakt. Jedoch wird bei allen vorgestellten Systemen eine zusätzliche Vorrichtung benötigt, die einen Sicherheitsgurt oder einen zusätzlichen Airbag im innenliegenden Sitzbereich vorsieht.

In der Patentschrift DE 100 43 290 C1 wird eine Vorrichtung zum Schutz von Insassen eines Fahrzeugs bei einem Aufprall des Fahrzeugs auf ein Hindernis beschrieben. Die beschriebene Vorrichtung ist beispielsweise in einem Fahrzeugsitz integriert und umfasst verstellbare Sitzkomponenten, welche eine Seitenabstützung in Abhängigkeit von Beschleunigungen in Richtung einer Fahrzeugquerachse bewirken, wobei die Sitzkomponenten im Bedarfsfall mindestens teilweise aus dem Fahrzeugsitz ausfahrbar sind. Hierbei werden die verstellbaren Sitzkomponenten über einen pyrotechnischen Gasgenerator irreversibel angetrieben.

In der WO 2006/105915 A1, die als nächstliegender Stand der Technik betrachtet ist, wird ein Fahrzeugsitz mit verstellbaren Sitzkomponenten, welche eine Seitenabstützung in Abhängigkeit von Beschleunigungen in Richtung einer Fahrzeugquerachse bewirken. Die Sitzkomponenten sind in den Fahrzeugsitz integriert und im Bedarfsfall mindestens teilweise ausfahrbar, wobei die Seitenabstützung reversibel ausgeführt ist und die Sitzkomponenten je nach Anforderung aus dem Fahrzeugsitz aus- oder einfahrbar sind. Insbesondere kann während des Durchfahrens einer Kurve wahlweise die eine linke oder rechte Seitenwange des Fahrzeugsitzes verstellt werden, um der auf dem Sitz sitzenden Person einen verbesserten Halt gegen die auf sie wirkende Zentrifugalkraft zu bieten.

### Offenbarung der Erfindung

Der erfindungsgemäße Fahrzeugsitz mit den Merkmalen des unabhängigen Patentanspruchs 1 hat demgegenüber den Vorteil, dass bei Seitenkollisionen oder hohen dynamischen Fahrzeugseitenbewegungen bzw. Fahrzeugquerbewegungen ein Insasse des Fahrzeugs im Fahrzeugsitz positionsabhängig vor dem Kontakt mit Strukturteilen des Innenraums des Fahrzeugs geschützt und/oder der Seitenhalt des Insassen im Fahrzeug erhöht ist. Dabei sieht die Erfindung einen Fahrzeugsitz mit verstellbaren Sitzkomponenten vor, welche eine Seitenabstützung in Abhängigkeit von Beschleunigungen in Richtung einer Fahrzeugquerachse bewirken, wobei erfindungsgemäß die Sitzkomponenten in den Fahrzeugsitz integriert und im Bedarfsfall mindestens teilweise ausfahrbar sind. Erfindungsgemäß handelt es sich bei dem Bedarfsfall um einen Crashfall und/oder eine Anforderung zur Fixierung eines Kindersitzes. In vorteilhafter Weise sind die Sitzkomponenten aus einer Ruhestellung in eine einen Insassen und/oder einen Kindersitz in Richtung einer Querachse des Fahrzeugs abstützende Schutzstellung bewegbar, so dass sowohl eine Schutzwirkung eines Insassen im Crashfall und/oder eine Fixierung des Kindersitzes auf dem Fahrzeugsitz ermöglicht werden. Ein weiterer Vorteil bietet die Erfindung für den zusätzlichen Seitenschutz

Ein weiterer Vorteil ist ein zusätzlicher Schutz bei einer auftretenden Sekundärkollision, wie beispielsweise einem Anprall an einen Baum, mit anschließendem Überschlag, oder bei anderen Kombinationen von mehreren aufeinander folgenden Crashvorgängen.

Durch die in den abhängigen Ansprüchen aufgeführten Maßnahmen und Weiterbildungen sind vorteilhafte Verbesserungen des im unabhängigen Patentanspruchs 1 angegebenen Fahrzeugsitzes möglich.

In einer Ausgestaltung der Erfindung handelt es sich bei dem Bedarfsfall um einen Crashfall und/oder eine Komfortanforderung und/oder eine Anforderung zur Fixierung eines Kindersitzes. In vorteilhafter Weise sind die Sitzkomponenten aus einer Ruhestellung in eine einen Insassen und/oder einen Kindersitz in Richtung einer Querachse des Fahrzeugs abstützende Schutzstellung bewegbar, so dass sowohl eine Schutzwirkung eines Insassen im Crashfall, ein komfortables Sitzen des Insassen im Fahrzeug und/oder eine Fixierung des Kindersitzes auf dem Fahrzeugsitz ermöglicht wird. Ein weiterer Vorteil bietet die Erfindung für den zusätzlichen Seitenschutz bei einem montierten Kindersitz auf dem Beifahrbei einem montierten Kindersitz auf dem Beifahrer- bzw. Rücksitz. Die seitliche Fixierung des Kindes und des Kindersitzes wird dadurch erhöht und reduziert somit die Belastung des Kinderkopfes.

In vorteilhafter Weise deckt der erfindungsgemäße Fahrzeugsitz drei Funktionen ab, nämlich die Funktion eines Schutzsystems, die Funktion eines konventionellen Schalensitzes bzw. fahrdynamischen Sitzes mit Seitenabstützung und die Funktion einer Kindersitzfixierung. In vorteilhafter Weise ist der Insasse auf den Bedarfsfall abgestimmt möglichst lange vorzugsweise umfassend vor dem Kontakt mit Strukturteilen bzw. im Crashfall vor intrudierenden Strukturteilen geschützt. Indem die im Bedarfsfall ausfahrbaren Sitzkomponenten bauraumsparend und dadurch kostensparend in den Fahrzeugsitz integriert sind, ergibt sich ein für seitliche Bewegungen des Fahrzeugs sowie gegen Intrusionen in den Innenraum des Fahrzeugs optimierter aktiver Fahrzeugsitz. Ein weiterer Vorteil der Erfindung liegt in der reversiblen Ausführung des Systems zur Seitenabstützung, da die Sitzkomponenten je nach Anforderung aus dem Fahrzeugsitz aus- oder einfahrbar sind. Ein weiterer Vorteil ist der Einsatz des erfindungsgemäßen Fahrzeugsitzes als Pre-Safe-System. Da die verstellbaren Sitzkomponenten des Fahrzeugsitzes ein Wegbewegen des Insassen von der Seitenstruktur triggern, kann der Fahrzeugsitz mit diesen verstellbaren Sitzkomponenten entsprechend auch als Pre-Safe-System eingesetzt werden.

Ein weiterer Vorteil ist ein zusätzlicher Schutz bei einer auftretenden Sekundärkollision, wie beispielsweise einem Anprall an einen Baum, mit anschließendem Überschlag, oder bei anderen Kombinationen von mehreren aufeinander folgenden Crashvorgängen.

Durch die in den abhängigen Ansprüchen aufgeführten Maßnahmen und Weiterbildungen sind vorteilhafte Verbesserungen des im unabhängigen Patentanspruchs 1 angegebenen Fahrzeugsitzes möglich.

In einer Ausgestaltung der Erfindung handelt es sich bei dem Bedarfsfall um eine Komfortanforderung. In vorteilhafter Weise sind die Sitzkomponenten aus einer Ruhestellung in eine einen Insassen in Richtung einer Querachse des Fahrzeugs abstützende Schutzstellung bewegbar, so dass ein komfortables Sitzen des Insassen im Fahrzeug ermöglicht wird.

In vorteilhafter Weise stellen sich die Sitzkomponenten einer Bewegung des Insassen und/oder eines Kindersitzes mindestens in Richtung der Fahrzeugquerachse entgegen. Der Vorteil liegt in einer verbesserten Seitenabstützung des Insassen und/oder des Kindersitzes im Vergleich zu einem konventionellen Schutzsystem. Dadurch erhöht sich die Schutzwirkung für den Insassen in komplexen Schleuder- und Seitencrashsituationen, da die schützende Sitzkomponente eine direkte Ankopplung zwischen Sitz und Insassen gewährleistet. Ein wesentlicher Vorteil des Systems ist, dass im Falle eines Fahrzeugüberschlags das Risiko des Herausschleuderns des Insassen aus dem Fahrzeug reduziert wird.

Bevorzugt sind die Sitzkomponenten mittels mindestens einer Verstelleinrichtung unabhängig voneinander verstellbar. Somit sind die Sitzkomponenten nicht nur einseitig oder auch beidseitig aus dem Fahrzeugsitz ausfahrbar, sondern es sind auch mehrere auf einer Seite des Fahrzeugsitzes vorgesehene Sitzkomponenten unabhängig voneinander verstellbar. In vorteilhafter Weise ergibt sich hierdurch eine an den Bedarfsfall angepasste Schutzwirkung, wie beispielsweise eine beidseitige Schutzwirkung durch die Sitzkomponenten im Falle einer stoßzugewandten oder stoßabgewandten Seitenkollision bzw. Fahrzeugseitwärtsbewegung.

Vorzugsweise ist die mindestens eine Verstelleinrichtung elektrisch und/oder mechanisch und/oder pyrotechnisch und/oder pneumatisch und/oder hydraulisch antreibbar. In vorteilhafter Weise kann der Antrieb der Verstelleinrichtung gezielt auf den jeweiligen Bedarfsfall abgestimmt werden, indem durch Auswahl des Antriebs die Auslösezeiten und somit die Geschwindigkeiten der Verstelleinrichtung beeinflussbar sind.

In vorteilhafter Weise ist die mindestens eine Verstelleinrichtung von einem Steuersystem des Fahrzeugs ansteuerbar. Vorzugsweise erfolgt die Ansteuerung der Verstelleinrichtung durch das Steuersystem in Abhängigkeit von Informationen über den Insassen, die Insassenposition, das Fahrzeugumfeld, einen Aufprall und/oder Fahrzeugdynamikgrößen. In vorteilhafter Weise kann eine Anpassung des Fahrzeugsitzes in Abhängigkeit der erfassten Informationen erfolgen, so dass eine Fehleinstellung erfolgreich verhindert wird. Durch die mögliche Individualisierung des erfindungsgemäßen Fahrzeugsitzes in Bezug auf Alter, Größe, Gewicht, Geschlecht können die verstellbaren Sitzkomponenten in vorteilhafter Weise individuell an die Insassen angepasst werden.

In einer Ausgestaltung der Erfindung ist die Verstelleinrichtung zusätzlich von einem Benutzer des Fahrzeugsitzes ansteuerbar. In vorteilhafter Weise hat hierdurch der Benutzer Einfluss auf den Komfort oder die Funktion des Fahrzeugsitzes, wobei jedoch im Crashfall die Komfortfunktion der zur Sicherung des Fahrzeuginsassen eingerichteten Funktion untergeordnet ist.

In einer Ausgestaltung der Erfindung wird vorgeschlagen, dass der Verstellweg der Sitzkomponenten vom Bedarfsfall und/oder von der Höhe der abzustützenden Beschleunigung abhängt.

Ferner wird vorgeschlagen, dass sich die ausgefahrenen Sitzkomponenten im Wesentlichen in Richtung einer Fahrzeuglängsachse erstrecken. In vorteilhafter Weise ist hierdurch eine Seitenabstützung eines Insassen und/oder eines Kindersitzes auf einfache Weise sichergestellt.

Bevorzugt sind die verstellbaren Sitzkomponenten in ein Sitzteil, eine Rückenlehne und/oder eine Kopfstütze des Fahrzeugsitzes integrierbar. In vorteilhafter Weise können hierdurch im relevanten Auslösefall mehrere Körperregionen eines Insassen abgestützt und vor Kollisionen geschützt werden.

Ein bevorzugtes Betriebsverfahren für einen Fahrzeugsitz wird durch die Merkmale des unabhängigen Patentanspruchs 10 angegeben, wobei der Fahrzeugsitz verstellbare Sitzkomponenten umfasst, welche eine Seitenabstützung in Abhängigkeit von Beschleunigungen in Richtung einer Fahrzeugquerachse bewirken, und wobei die in den Fahrzeugsitz integrierten Sitzkomponenten im Bedarfsfall mindestens teilweise ausgefahren werden. Das Betriebsverfahren ermöglicht in vorteilhafter Weise einen an unterschiedliche Bedarfsfälle und Insassen bestmöglichst angepassten Fahrzeugsitz.

### Kurze Beschreibung der Zeichnungen

Figur 1 zeigt ein schematisches Blockdiagramm zur Ansteuerung eines erfindungsgemäßen Fahrzeugsitzes.
Figur 2a zeigt eine Draufsicht auf den erfindungsgemäßen Fahrzeugsitz mit verstellbaren Sitzkomponenten, wobei sich die Sitzkomponenten in einer in den Fahrzeugsitz eingefahrenen Position befinden.
Figur 2b zeigt eine Draufsicht auf den erfindungsgemäßen Fahrzeugsitz mit verstellbaren Sitzkomponenten, wobei sich beide Sitzkomponenten in einer aus dem Fahrzeugsitz ausgefahrenen Position befinden.
Figur 3 zeigt eine Draufsicht auf ein Fahrzeug mit erfindungsgemäßen Fahrzeugsitzen mit verstellbaren Sitzkomponenten, wobei sich nur jeweils eine Sitzkomponente eines Fahrzeugsitzes in einer aus dem Fahrzeugsitz ausgefahrenen Position befindet.
Figur 4 zeigt eine vereinfachte schematische Darstellung einer Seitenansicht auf einen erfindungsgemäßen Fahrzeugsitz mit einseitig ausgefahrenen Sitzkomponenten, wobei die Sitzkomponenten in eine Rückenlehne und ein Sitzteil des Fahrzeugsitzes integriert sind.
Figur 5a zeigt eine schematische Darstellung einer Verstelleinrichtung zum Verstellen der erfindungsgemäßen Sitzkomponenten, wobei zwei Sitzkomponenten über eine Verstelleinrichtung verstellbar sind.
Figur 5b zeigt eine schematische Darstellung einer Verstelleinrichtung zum Verstellen der erfindungsgemäßen Sitzkomponenten, wobei jede Sitzkomponente über eine separate Verstelleinrichtung verstellbar ist.

### Ausführungsformen der Erfindung

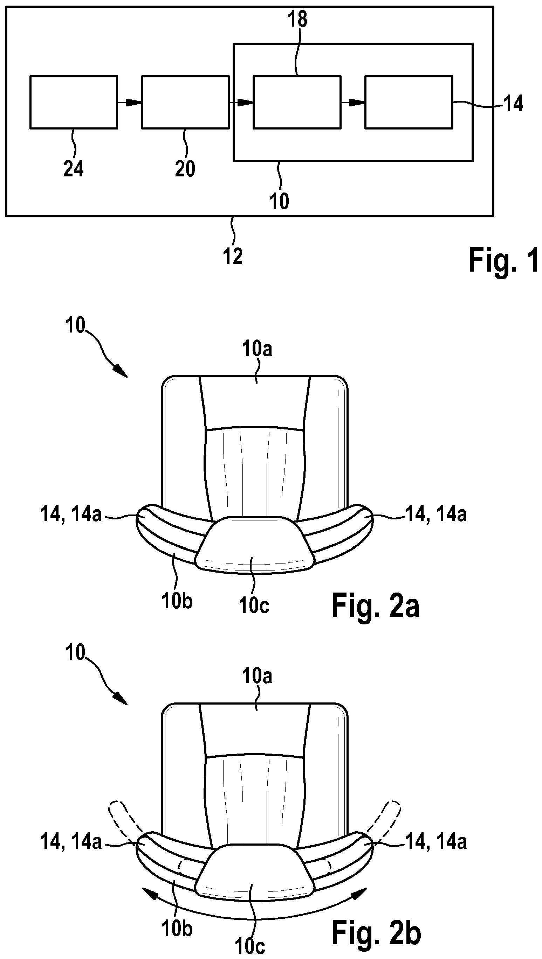

Wie aus Fig. 1 ersichtlich ist, umfasst ein System für ein Insassenschutzsystem in einem Fahrzeug 12 ein Sensorsystem 24, ein Steuersystem 20 und mindestens ein Rückhaltemittel, das einen Fahrzeugsitz 10 mit verstellbaren Sitzkomponenten 14 umfasst, welche eine Seitenabstützung in Abhängigkeit von Beschleunigungen in Richtung einer Fahrzeugquerachse 16 bewirken. Bei dem Steuersystem 20 handelt es sich vorzugsweise um das Airbagsteuergerät, wobei auch andere im Fahrzeug angeordnete Steuergeräte, wie beispielsweise ein ESP-Steuergerät, oder kombinierte Steuergeräte denkbar sind. Das Sensorsystem 24 verfügt über Sensoren, welche den Fahrzeugzustand in Bezug auf Bewegung, Umgebung und Crashsituationen detektieren. D.h. das Sensorsystem 24 sensiert Informationen über einen Fahrzeuginnenraum, ein Fahrzeugumfeld, einen Aufprall und/oder Fahrzeugdynamikgrößen. Das Steuersystem 20 empfängt die erfassten Informationen vom Sensorsystem 24 und wertet die empfangenen Informationen zur Ermittlung einer aktuellen Fahrsituation aus, wobei das Steuersystem 20 die ermittelte aktuelle Fahrsituation dahingehend auswertet, ob eine Aktivierung des mindestens einen Rückhaltemittels erforderlich ist oder nicht. Die empfangenen Informationen über Fahrdynamikgrößen in Verbindung mit den Informationen aus dem Fahrzeugumfeld ermöglichen dem Steuersystem 20 eine vorausschauende Ansteuerung von reversiblen Rückhaltemitteln, wenn die Wahrscheinlichkeit für eine mögliche Kollision, wie beispielsweise einen Aufprall auf ein Hindernis, einen vorgegebenen Schwellwert übersteigt.

In den dargestellten Ausführungsbeispielen gemäß Fig. 2 bis 4 ist das mindestens eine Rückhaltemittel als Fahrzeugsitz 10 mit verstellbaren Sitzkomponenten 14 ausgeführt, wobei natürlich auch weitere Rückhaltemittel wie beispielsweise Airbags und/oder weitere Sitzaktuatoriken vorhanden sein können. In den Fig. 1 bis 4 ist beispielhaft ein Fahrzeugsitz 10 mit verstellbaren Sitzkomponenten 14 dargestellt, wobei im Fahrzeug 12 auch mehrere erfindungsgemäße Fahrzeugsitze 10 mit verstellbaren Sitzkomponenten 14 vorgesehen sein können. Die Funktionsweise des erfindungsgemäßen Fahrzeugsitzes 10 passt sich ohne Probleme in ein bestehendes Rückhaltesystemkonzept ein.

Die Figuren 2 bis 4 zeigen einen erfindungsgemäßen Fahrzeugsitz 10 eines Fahrzeugs 12 mit verstellbaren Sitzkomponenten 14, welche eine Seitenabstützung in Abhängigkeit von Beschleunigungen in Richtung einer Fahrzeugquerachse 16 bewirken.

Erfindungsgemäß sind die Sitzkomponenten 14 in den Fahrzeugsitz 10 integriert. Generell ist eine Integration der Sitzkomponenten 14 in ein Sitzteil 10a und/oder eine Rückenlehne 10b und/oder eine Kopfstütze 10c und/oder ein weiteres Teil des Fahrzeugsitzes 10 denkbar.

Erfindungsgemäß sind die Sitzkomponenten 14 im Bedarfsfall mindestens teilweise aus dem Fahrzeugsitz 10 ausfahrbar. Bei dem Bedarfsfall kann es sich um einen Crashfall und/oder eine Komfortanforderung und/oder eine Anforderung zur Fixierung eines Kindersitzes handeln. Je nach Sitzbelegung und/oder Fahrsituation können sich die Sitzkomponenten 14 somit in einer Crashstellung und/oder einer Komfortstellung und/oder einer Fixierungsstellung befinden. Die Sitzkomponenten 14 können somit der Seitenabstützung eines Insassen und/oder eines Kindersitzes und/oder eines weiteren, auf dem Fahrzeugsitz 10 befindlichen Gegenstandes dienen. Im Crashfall und/oder im Komfortfall und/oder im Fixierungsfall stellen sich die Sitzkomponenten 14 einer Bewegung des Insassen und/oder eines Kindersitzes und/oder eines auf dem Fahrzeugsitz 10 befindlichen Gegenstandes mindestens in Richtung der Fahrzeugquerachse 16 entgegen. Der Verstellweg der Sitzkomponenten 14 hängt jeweils vom Bedarfsfall und/oder von der Höhe der abzustützenden Beschleunigung ab.

Das Sensorsystem 24 des Fahrzeugs 12 verfügt über Sensoren, welche den Fahrzeugzustand in Bezug auf Bewegung, Umgebung und Crashsituationen detektieren. Mögliche Sensoren zur Detektion eines relevanten Fahrzeugzustandes können als Gierratensensor, Querbeschleunigungssensor, Seitenkollisionssensor und/oder Umfeldsensor ausgeführt werden, der beispielsweise eine optische Kollisionsobjekterkennung ermöglicht. Wird ein relevanter Fahrzeugzustand, wie beispielsweise eine erhöhte Quergeschwindigkeit und/oder eine Seitenkollision, ermittelt, so werden gezielt ausgewählte Sitzkomponenten 14 zur stoßzugewandten Seite bzw. in Richtung des Quergeschwindigkeitsvektors gedreht bzw. ausgefahren. Vorzugsweise sind zwei Grundfreiheitsgrade vorgesehen, nämlich eine Rotation um eine definierte Achse, wie beispielsweise eine Fahrzeughochachse 26 oder eine Fahrzeuglängsachse 22, und eine Translation beispielsweise in Richtung der Fahrzeuglängsachse 22. Die Umsetzung dieser Bewegungsfreiheitsgrade erfordert beispielsweise Drehgelenke für den Rotationsfreiheitsgrad oder beispielsweise Schienenelemente für den Translationsfreiheitsgrad. Grundsätzlich sollten diese Bewegungsfreiheitsgrade reversibel gestaltet werden, so dass einerseits die fahrdynamische Unterstützung und damit Reversibilität der Systeme im normalen Fahrbetrieb gewährleistet ist und andererseits die Safety-Funktionen im Crashfall aktiviert werden können. In einer Ausführung des erfindungsgemäßen Systems kann der Bewegungszustand des Fahrzeuges 12 auch nach einer auslösenden Kollision detektiert werden, um so die Insassen auch in Folgekollisionen oder Schleudervorgängen zu schützen. Dazu können je nach Kraftimpuls auf die Insassen die Sitzkomponenten 14 in eine linke oder eine rechte Endposition fahren, damit der Insasse zu jedem Zeitpunkt optimal abgefangen wird.

Die Sitzkomponenten 14 sind mittels mindestens einer Verstelleinrichtung 18 unabhängig voneinander verstellbar, welche beispielsweise elektrisch und/oder mechanisch und/oder pyrotechnisch und/oder pneumatisch und/oder hydraulisch angetrieben werden kann. Die mindestens eine Verstelleinrichtung 18 bzw. der Antrieb 28 kann von einem Steuersystem 20 des Fahrzeugs 12 angesteuert werden. Zusätzlich kann die Verstelleinrichtung 18 von einem Benutzer des Fahrzeugsitzes 10 angesteuert werden.

In einer Ausgestaltung der Erfindung können die Sitzkomponenten 18 bei einer schwereren Seitenkollision durch die Freisetzung einer Energie aus dem Fahrzeugsitz 10 ausgefahren werden. Dies kann beispielsweise durch eine pyrotechnische Entladung erfolgen oder auf elektromechanischem, pneumatischem oder hydraulischem Weg umgesetzt werden. In gleicher Art und Weise eignen sich auch mechanische Aktoren, wie beispielsweise vorgespannte Federelemente, die eine schlagartige Freigabe der Energie erlauben. Eine Kombination obiger Systeme ist ebenfalls denkbar. Hintergrund ist immer, dass die Sitzkomponenten 14 den Ansprüchen einer schnellen Bewegung gerecht werden. Wie bereits erwähnt, liegen üblicherweise die Auslösezeiten für Seitenairbags bei ca. 5 - 10 ms nach Kollision und die Aufblaszeit noch einmal bei 10 - 15 ms. Dies entspricht der Zeitspanne, welche den erfindungsgemäßen Sitzkomponenten 14 im Crashfall ebenfalls zur Verfügung steht, um ihre jeweilige Endlage zu erreichen. Im Falle der stoßabgewandten Seite ergeben sich dieselben Auslösezeitspannen. Erfolgt eine Aktivierung der Sitzkomponenten 14 im Vorfeld, beispielsweise durch eine Fahrzeugeigenbewegung oder eine vorausschauende Seitensensorik, kann der Aktivierungszeitraum je nach Sensorik im Bereich von ungefähr 150 ms erhöht werden.

Eine weitere Ausgestaltung des erfindungsgemäßen Fahrzeugsitzes 10 ist die Kopplung der Entscheidung zur Aktivierung der Sitzkomponenten 14 an eine Innenraumüberwachung. Befindet sich ein Insasse in einer auslösekritischen Position, so kann die Auslösung der Verstellung der Sitzkomponenten 14 abgebrochen werden. Eine auslösekritische Position könnte sein, wenn Körperteile im Bewegungsraum einer Armlehne des Fahrzeugsitzes 10 liegen, d.h. wenn beispielsweise ein Beifahrer seinen Kopf zum Schlafen auf die Beifahrertür oder den Fahrer ablegt. Eine entsprechende Innenraumsensorik zur Detektion einer Insassenposition können als Kamerasysteme oder Sitzbelegungssysteme ausgeführt werden. Ergänzende Informationen, die für die Ansteuerung der Sitzkomponenten 14 nicht unerheblich sind, können sich aus Insassenklassifizierungssystemen ergeben. D.h. Gewicht, Größe, Alter und Geschlecht der Insassen können in die Bestimmung und Aktivierung der optimalen Bewegung der Sitzkomponenten 14 mit einfließen.

Weiterhin wäre eine Anbindung der Sitzkomponenten 14 an vorhandene Algorithmen zur Unfallfolgenverringerung möglich. So könnten beispielsweise im Falle einer Aktivierung einer Rollover-Sensierungs-Funktion weit vor der Airbagauslösung die Sitzkomponenten 14 in die entsprechenden Positionen verstellt werden.

Um einen Insassen und/oder einen Kindersitz bei ausgefahrenen Sitzkomponenten 14 in Form einer Schale zumindest teilweise zu "umfassen" bzw. zu "umschließen", erstrecken sich die ausgefahrenen Sitzkomponenten 14 im Wesentlichen in Richtung einer Fahrzeuglängsachse 22.

Figur 2a und 2b zeigen ein Ausführungsbeispiel, bei welchem die Sitzkomponenten 14, 14a in die Rückenlehne 10b des Fahrzeugsitzes 10 integriert sind. Die Integration der Sitzkomponenten 14, 14a ist derart gestaltet, dass diese ausfahrbar in der Rückenlehne 10b gelagert sind, so dass eine seitliche Rotation bzw. Drehung der Sitzkomponenten 14, 14a in Bezug zur feststehenden Rückenlehne 10b bzw. ein bogenförmiges Ausfahren der Sitzkomponenten 14, 14a aus der Rückenlehne 10b ermöglicht wird. Die Drehung erfolgt in Richtung um eine Fahrzeughochachse 26. Dabei sind die Sitzkomponenten 14, 14a derart gestaltet, dass ein Insasse bei ausgefahrenen Sitzkomponenten 14, 14a in Form einer Schale zumindest teilweise "umfasst" bzw. "umschlossen" wird, so dass eine Seitenführung des Insassen sichergestellt wird. Zur Bildung der Schalenform werden die Sitzkomponenten 14, 14a in diesem Ausführungsbeispiel zu beiden Seiten des Fahrzeugsitzes 10, d.h. beidseitig ausgefahren. Das bedeutet, dass das in Figur 2a und 2b dargestellte Ausführungsbeispiel ein ausfahrbar gelagertes Sitzkomponentensystem 14, 14a im Inneren des Fahrzeugsitzes 10 vorsieht. Beim Auftreten von Querkräften kann sich das System 14, 14a beidseitig aus dem Inneren des Fahrzeugsitzes 10 heraus drehen bzw. aus dem Inneren des Fahrzeugsitzes 10 ausfahren und den Insassen wie ein Arm sicher von hinten im Fahrzeugsitz 10 umschließen. Je nach Bewegungsrichtung des Insassen können die vorzugsweise schalenartigen Sitzkomponenten 14, 14a ein- oder beidseitig aus dem Fahrzeugsitz 10 ausgefahren werden, wobei die Sitzkomponenten 14, 14a in der Ruhestellung beziehungsweise im Normalzustand in den Fahrzeugsitz 10 integriert bzw. eingefahren und somit nicht sichtbar sind. Der erfindungsgemäße Fahrzeugsitz 10 verfügt daher über Sitzkomponenten 14 und 14a, die in einer relevanten Fahrsituation dazu dienen, den Insassen durch Ausfahren aus dem Fahrzeugsitz 10 abzustützen oder zu schützen. Zusätzlich kann das System 14 auch die Funktion eines fahraktiven Fahrzeugsitzes 10 übernehmen.

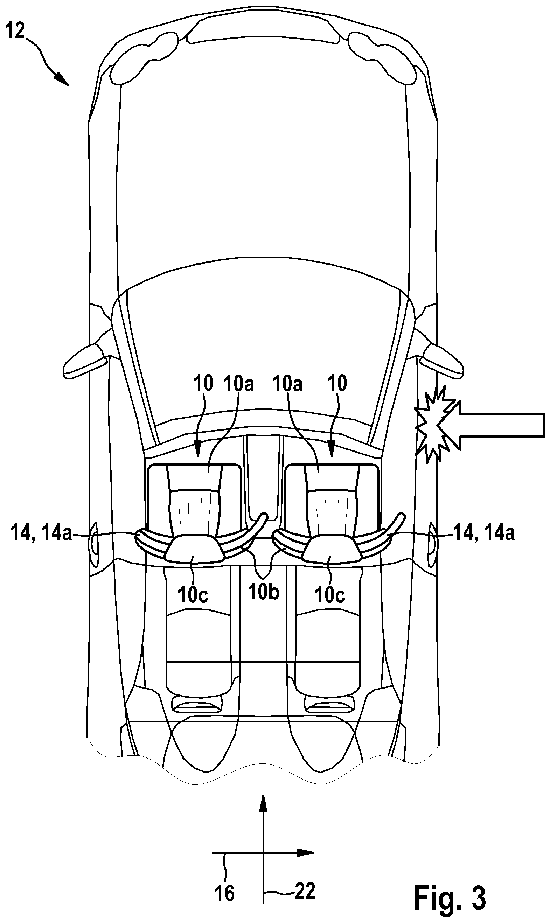

Fig. 3 zeigt ein Ausführungsbeispiel, bei welchem nur die crashzugewandten Sitzkomponenten 14, 14a des Beifahrersitzes 10 bzw. die crashzugewandten Sitzkomponenten 14, 14a des Fahrersitzes 10 sehr schnell ausgefahren und/oder gedreht werden und so schützend vor dem Insassen positioniert werden können. Es kann sinnvoll sein, dass auf der crashabgewandten Seite keine Sitzkomponente ausgefahren und damit die Bewegungsmöglichkeiten des Insassen in Richtung der "sicheren" Seite zugelassen wird.

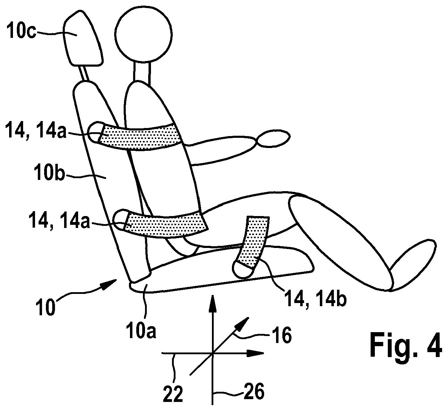

In einer weiteren Ausführung können mehrere Sitzkomponenten 14 in einen Fahrzeugsitz 10 integriert werden. So können im relevanten Auslösefall mehrere Körperregionen eines Insassen abgestützt und vor Kollisionen geschützt werden. Mögliche Körperregionen wären beispielsweise der Kopfbereich, der Oberkörperbereich, der Nierenbeckenbereich und/oder der Oberschenkelbereich des Insassen. So zeigt Fig. 4 einen Fahrzeugsitz 10 mit Sitzkomponenten 14, 14a im Oberkörperbereich, im Nierenbeckenbereich und mit Sitzkomponenten 14, 14b im Oberschenkelbereich, wobei die Sitzkomponenten 14, 14a, 14b in diesem Fall nur einseitig ausgefahren sind. Denkbar ist auch eine zusätzliche, hier nicht dargestellte Mechanik im Inneren des Fahrzeugsitzes 10, welche die Rückenlehne 10b und/oder eine Armlehne des Fahrzeugsitzes 10 dichter an den Insassen schwenkt.

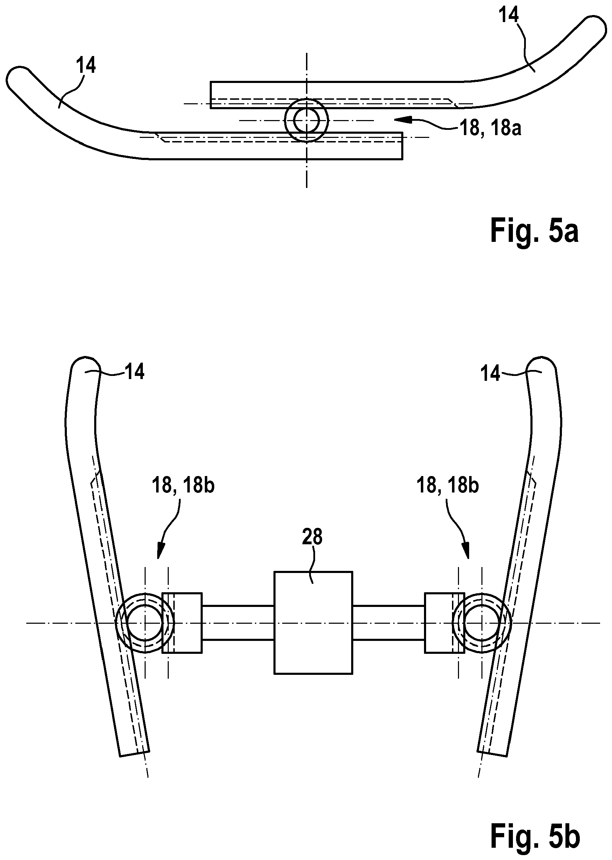

Fig. 5a und 5b zeigen die Verstelleinrichtung 18, 18a, 18b zur Verstellung der Sitzkomponenten 14, die wie bereits erwähnt über einen elektrischen und/oder mechanischen und/oder pyrotechnischen und/oder pneumatischen und/oder hydraulischen Antrieb angetrieben werden können. Eine pyrotechnische Einheit wäre dabei einer elektromechanischen Einheit entsprechend überlagert, so dass beide Konzepte eine entsprechende Aktivierung der Verstelleinrichtung 18, 18a, 18b ermöglichen. Die Ausführungsform der Verstelleinrichtung 18, 18a, 18b gemäß Figuren 5a und 5b weist ein Zahnradsystem auf, welches je nach Rotationsrichtung ein Ein- und Ausfahren der Sitzkomponenten 14 ermöglicht, wobei gemäß Fig. 5a zwei Sitzkomponenten 14 über eine Verstelleinrichtung 18, 18a verstellbar sind und gemäß Fig. 5b jede Sitzkomponente 14 über eine separate Verstelleinrichtung 18, 18b verstellbar ist. Die Verstelleinrichtung 18, 18b wird über einen elektrischen Antrieb 28 angetrieben. Eine entsprechende Kupplung sorgt für eine nur einseitige Auszugsmöglichkeit. Alternativ hierzu kann auch auf bewährte Funktionsprinzipien bzw. bestehende Systeme zurückgegriffen werden, wie sie beispielsweise bei einem Gurtbandstraffer verbaut sind.

Bei einem Betriebsverfahren für einen Fahrzeugsitz 10 mit verstellbaren Sitzkomponenten 14, welche eine Seitenabstützung in Abhängigkeit von Beschleunigungen in Richtung einer Fahrzeugquerachse 16 bewirken, werden erfindungsgemäß die in den Fahrzeugsitz 10 integrierten Sitzkomponenten 14 im Bedarfsfall mindestens teilweise ausgefahren.

Bevorzugt arbeiten die verstellbaren Sitzkomponenten 14 gemeinsam mit einem Rückhaltesystem mit querdynamikabhängiger Rückhaltekraft, d.h. mit einem bei Seitenkollisionen wirksamen Rückhaltesystem. Bei dem Rückhaltesystem kann es sich beispielsweise um ein Gurtsystem mit querdynamikabhängiger Gurtstraffung handeln. Somit können die verstellbaren Sitzkomponenten 14 eine denkbare Alternative bzw. Ergänzung zu bereits vorhandenen Rückhaltesystemen mit querdynamikabhängiger Rückhaltekraft sein. In vorteilhafter Weise können die verstellbaren Sitzkomponenten 14 sowohl in den Frontsitzen als auch in den Rücksitzen eines Fahrzeuges 12 eingesetzt werden, wobei eine Sitzbelegungserkennung bzw. eine Insassenpositionserfassung vorgesehen werden kann.

## Patentansprüche

1. Fahrzeugsitz (10) mit verstellbaren Sitzkomponenten (14), welche eine Seitenabstützung in Abhängigkeit von Beschleunigungen in Richtung einer Fahrzeugquerachse (16) bewirken, wobei die Sitzkomponenten (14) in den Fahrzeugsitz (10) integriert und im Bedarfsfall mindestens teilweise ausfahrbar sind, und wobei die Seitenabstützung reversibel ausgeführt ist und die Sitzkomponenten (14) je nach Anforderung aus dem Fahrzeugsitz (10) aus- oder einfahrbar sind, wobei es sich bei dem Bedarfsfall um einen Crashfall und/oder eine Anforderung zur Fixierung eines Kindersitzes handelt, wobei sich die Sitzkomponenten (14) einer Bewegung des Insassen und/oder eines Kindersitzes mindestens in Richtung der Fahrzeugquerachse (16) entgegenstellen, **dadurch gekennzeichnet, dass** das Fahrzeug (12) über ein Sensorsystem (24) mit Sensoren verfügt, welche den Fahrzeugzustand in Bezug auf Umgebung und Crashsituationen detektieren, wobei die Sensoren zur Detektion eines relevanten Fahrzeugzustandes als Gierratensensor oder Seitenkollisionssensor oder Umfeldsensor ausgeführt sind, der beispielsweise eine optische Kollisionsobjekterkennung ermöglicht, wobei bei einer Ermittlung einer Seitenkollision gezielt ausgewählte Sitzkomponenten (14) zur stoßzugewandten Seite ausgefahren werden, wobei die Sitzkomponenten (14) durch vorgespannte Federelemente ausgefahren werden, die eine schlagartige Freisetzung von Energie erlauben.

2. Fahrzeugsitz nach Anspruch 1, **dadurch gekennzeichnet, dass** Schienenelemente vorgesehen sind, entlang denen die Sitzkomponenten (14) entsprechend einem Translationsfreiheitsgrad ausgefahren werden.

3. Fahrzeugsitz nach Anspruch 1 oder 2, **dadurch gekennzeichnet, dass** die Sitzkomponenten (14) mittels mindestens einer Verstelleinrichtung (18) unabhängig voneinander verstellbar sind.

4. Fahrzeugsitz nach Anspruch 3, **dadurch gekennzeichnet, dass** die mindestens eine Verstelleinrichtung (18) elektrisch und/oder mechanisch und/oder pyrotechnisch und/oder pneumatisch und/oder hydraulisch antreibbar ist.

5. Fahrzeugsitz nach Anspruch 3 oder 4, **dadurch gekennzeichnet, dass** die mindestens eine Verstelleinrichtung (18) von einem Steuersystem (20) des Fahrzeugs (12) ansteuerbar ist.

6. Fahrzeugsitz nach einem der Ansprüche 3 bis 5, **dadurch gekennzeichnet, dass** die Verstelleinrichtung (18) zusätzlich von einem Benutzer des Fahrzeugsitzes (10) ansteuerbar ist.

7. Fahrzeugsitz nach einem der Ansprüche 1 bis 6, **dadurch gekennzeichnet, dass** der Verstellweg der Sitzkomponenten (14) vom Bedarfsfall und/oder von der Höhe der abzustützenden Beschleunigung abhängt.

8. Fahrzeugsitz nach einem der Ansprüche 1 bis 7, **dadurch gekennzeichnet, dass** sich die ausgefahrenen Sitzkomponenten (14) im Wesentlichen in Richtung einer Fahrzeuglängsachse (22) erstrecken.

9. Fahrzeugsitz nach einem der Ansprüche 1 bis 8, **dadurch gekennzeichnet, dass** die verstellbaren Sitzkomponenten (14) in ein Sitzteil (10a), eine Rückenlehne (10b) und/oder eine Kopfstütze (10c) des Fahrzeugsitzes (10) integrierbar sind.

10. Betriebsverfahren für einen Fahrzeugsitz, insbesondere für einen Fahrzeugsitz nach einem der Ansprüche 1 bis 9, wobei der Fahrzeugsitz (10) verstellbare in den Fahrzeugsitz integrierten Sitzkomponenten (14) umfasst, welche eine Seitenabstützung in Abhängigkeit von Beschleunigungen in Richtung einer Fahrzeugquerachse (16) bewirken, wobei die in den Fahrzeugsitz (10) integrierten Sitzkomponenten (14) im Bedarfsfall mindestens teilweise ausgefahren werden, wobei es sich bei dem Bedarfsfall um einen Crashfall und/oder eine Anforderung zur Fixierung eines Kindersitzes handelt, wobei sich die Sitzkomponenten (14) einer Bewegung des Insassen und/oder eines Kindersitzes mindestens in Richtung der Fahrzeugquerachse (16) entgegenstellen, **dadurch gekennzeichnet, dass** das Fahrzeug (12) über ein Sensorsystem (24) mit Sensoren verfügt, welche den Fahrzeugzustand in Bezug auf Umgebung und Crashsituationen detektieren, wobei die Sensoren zur Detektion eines relevanten Fahrzeugzustandes als Gierratensensor oder Seitenkollisionssensor oder Umfeldsensor ausgeführt sind, der beispielsweise eine optische Kollisionsobjekterkennung ermöglicht, wobei bei einer Ermittlung einer Seitenkollision gezielt ausgewählte Sitzkomponenten 14 zur stoßzugewandten Seite ausgefahren werden, wobei die Sitzkomponenten (14) durch vorgespannte Federelemente ausgefahren werden, die eine schlagartige Freisetzung von Energie erlauben.

## Claims

1. Vehicle seat (10) having adjustable seat components (14) which provide lateral support as a function of accelerations in the direction of a vehicle transverse axis (16), wherein the seat components (14) are integrated into the vehicle seat (10) and in a necessary situation can be extended at least partially, and wherein the lateral support is embodied in a reversible fashion and the seat components (14) can be extended or retracted from the vehicle seat (10) depending on requirements, wherein the necessary situation is a crash situation and/or a requirement to secure a child's seat, wherein the seat components (14) counteract a movement of the vehicle occupant and/or of a child's seat at least in the direction of the vehicle transverse axis (16), **characterized in that** the vehicle (12) has a sensor system (24) with sensors which detect the state of the vehicle with respect to the surroundings and crash situations, wherein the sensors are designed to detect a relevant state of the vehicle as a yaw rate sensor or side collision sensor or surroundings sensor which permits, for example, visual detection of a collision object, wherein when a side collision is determined, seat components (14) which are selected in a targeted fashion are extended towards the side facing the impact, wherein the seat components (14) are extended by prestressed spring elements which permit a sudden release of energy.

2. Vehicle seat according to Claim 1, **characterized in that** rail elements are provided along which the seat components (14) are extended in accordance with a degree of freedom of translation.

3. Vehicle seat according to Claim 1 or 2, **characterized in that** the seat components (14) can be adjusted independently of one another by means of at least one adjustment device (18).

4. Vehicle seat according to Claim 3, **characterized in that** the at least one adjustment device (18) can be driven electrically and/or mechanically and/or pyrotechnically and/or pneumatically and/or hydraulically.

5. Vehicle seat according to Claim 3 or 4, **characterized in that** the at least one adjustment device (18) can be actuated by a control system (20) of the vehicle (12).

6. Vehicle seat according to one of Claims 3 to 5, **characterized in that** the adjustment device (18) can be additionally actuated by a user of the vehicle seat (10).

7. Vehicle seat according to one of Claims 1 to 6, **characterized in that** the adjustment travel of the seat components (14) depends on the necessary situation and/or on the level of the acceleration to be supported.

8. Vehicle seat according to one of Claims 1 to 7, **characterized in that** the extended seat components (14) run essentially in the direction of a vehicle longitudinal axis (22).

9. Vehicle seat according to one of Claims 1 to 8, **characterized in that** the adjustable seat components (14) can be integrated into a seat part (10a), a backrest (10b) and/or a headrest (10c) of the vehicle seat (10).

10. Operating method for a vehicle seat, in particular for a vehicle seat according to one of Claims 1 to 9, wherein the vehicle seat (10) comprises adjustable seat components (14) which are integrated into the vehicle seat and which provide lateral support as a function of accelerations in the direction of a vehicle transverse axis (16), wherein in a necessary situation the seat components (14) which are integrated into the vehicle seat (10) are at least partially extended, wherein the necessary situation is a crash situation and/or a requirement to secure a child's seat, wherein the seat components (14) counteract a movement of the vehicle occupant and/or of a child's seat at least in the direction of the vehicle transverse axis (16), **characterized in that** the vehicle (12) has a sensor system (24) with sensors which detect the state of the vehicle with respect to the surroundings and crash situations, wherein the sensors are designed to detect a relevant state of the vehicle as a yaw rate sensor or side collision sensor or surroundings sensor which permits, for example, visual detection of a collision object, wherein when a side collision is determined seat components 14 which are selected in a targeted fashion are extended towards the side facing the impact, wherein the seat components (14) are extended by prestressed spring elements which permit a sudden release of energy.

## Revendications

1. Siège de véhicule (10) avec des composants de siège réglables (14), qui assurent un soutien latéral en fonction de l'accélération dans la direction d'un axe transversal (16) du véhicule, dans lequel les composants de siège (14) sont intégrés dans le siège de véhicule (10) et en cas de nécessité peuvent être sortis au moins partiellement, et dans lequel le soutien latéral est réalisé de façon réversible et les composants de siège (14) peuvent être à la demande sortis du siège de véhicule (10) ou rentrés, dans lequel le cas de nécessité est une collision et/ou une exigence de fixer un siège d'enfant, dans lequel les composants de siège (14) s'opposent à un mouvement de l'occupant et/ou d'un siège d'enfant au moins dans la direction de l'axe transversal (16) du véhicule, **caractérisé en ce que** le véhicule (12) dispose d'un système de détection (24) avec des capteurs qui détectent l'état du véhicule par rapport à l'environnement et à des situations de collision, dans lequel les capteurs sont conçus pour la détection d'un état important du véhicule sous forme de capteur de taux de lacet ou de capteur de collision latérale ou de capteur du champ environnant, qui permet par exemple une reconnaissance optique d'un obstacle, dans lequel lors d'une détermination d'une collision latérale des composants de siège (14) soigneusement sélectionnés sont sortis vers le côté exposé au choc, dans lequel les composants de siège (14) sont sortis par des éléments de ressort précontraints, qui permettent une libération brusque d'énergie.

2. Siège de véhicule selon la revendication 1, **caractérisé en ce qu'**il est prévu des éléments de rail, le long desquels les composants de siège (14) peuvent être sortis en fonction de leur degré de liberté de translation.

3. Procédé selon la revendication 1 ou 2, **caractérisé en ce que** les composants de siège (14) peuvent être réglés indépendamment l'un de l'autre au moyen d'au moins un dispositif de réglage (18).

4. Siège de véhicule selon la revendication 3, **caractérisé en ce que** ledit au moins un dispositif de réglage (18) peut être entraîné de façon électrique et/ou mécanique et/ou pyrotechnique et/ou pneumatique et/ou hydraulique.

5. Siège de véhicule selon la revendication 3 ou 4, **caractérisé en ce que** ledit au moins un dispositif de réglage (18) peut être commandé par un système de commande (20) du véhicule (12).

6. Siège de véhicule selon l'une quelconque des revendications 3 à 5, **caractérisé en ce que** le dispositif de réglage (18) peut en outre être commandé par un utilisateur du siège de véhicule (10).

7. Siège de véhicule selon l'une quelconque des revendications 1 à 6, **caractérisé en ce que** la course de réglage des composants de siège (14) dépend du cas de nécessité et/ou de la hauteur de l'accélération à supporter.

8. Siège de véhicule selon l'une quelconque des revendications 1 à 7, **caractérisé en ce que** les composants de siège sortis (14) s'étendent essentiellement dans la direction de l'axe longitudinal (22) du véhicule.

9. Siège de véhicule selon l'une quelconque des revendications 1 à 8, **caractérisé en ce que** les composants de siège réglables (14) peuvent être intégrés dans une partie d'assise (10a), un dossier (10b) et/ou un appuie-tête (10c) du siège de véhicule (10).

10. Procédé de fonctionnement pour un siège de véhicule, en particulier pour un siège de véhicule selon l'une quelconque des revendications 1 à 9, dans lequel le siège de véhicule (10) comprend des composants de siège (14) réglables intégrés dans le siège de véhicule, qui assurent un soutien latéral en fonction d'accélérations dans la direction d'un axe transversal (16) du véhicule, dans lequel on fait sortir au moins partiellement en cas de nécessité les composants de siège (14) intégrés dans le siège de véhicule (10), dans lequel le cas de nécessité est un cas de collision et/ou une exigence de fixer un siège d'enfant, dans lequel les composants de siège (14) s'opposent à un mouvement de l'occupant et/ou du siège d'enfant au moins dans la direction de l'axe transversal (16) du véhicule, **caractérisé en ce que** le véhicule (12) dispose d'un système de détection (24) avec des capteurs qui détectent l'état du véhicule par rapport à l'environnement et à des situations de collision, dans lequel les capteurs sont conçus pour la détection d'un état important du véhicule sous forme de capteur de taux de lacet ou de capteur de collision latérale ou de capteur du champ environnant, qui permet par exemple une reconnaissance optique d'un obstacle, dans lequel lors d'une détermination d'une collision latérale des composants de siège (14) soigneusement sélectionnés sont sortis vers le côté exposé au choc, dans lequel les composants de siège (14) sont sortis par des éléments de ressort précontraints, qui permettent une libération brusque d'énergie.
